# EUROPÄISCHE PATENTSCHRIFT

(11) **EP 0 527 413 B1**
(45) Veröffentlichungstag und Bekanntmachung des Hinweises auf die Patenterteilung: **09.04.1997**
(21) Anmeldenummer: 92113185.0
(22) Anmeldetag: 03.08.1992
(51) Int. Cl.: F16L 11/16, F16L 9/16, F01N 7/08

(54) **Wickelschlauch aus Metall**
Wrapped flexible metal tube
Tuyau métallique flexible enroulé

(30) Priorität: 08.08.1991 DE 4126267; 16.09.1991 DE 4130739
(43) Veröffentlichungstag der Anmeldung: 17.02.1993
(73) Patentinhaber: Witzenmann GmbH Metallschlauch-Fabrik Pforzheim, D-75175 Pforzheim (DE)
(72) Erfinder: Dörge, Franz, W-7538 Keltern 3 (DE); Koch, Hansjörg, W-7530 Pforzheim (DE); Leidig, Hans-Jürgen, W-7130 Mühlacker (DE); Pluschke, Michael, W-7540 Neuenbürg-R. (DE); Quick, Klaus, Dipl.-Ing., W-7530 Pforzheim (DE); Weinbrecht, Wolfgang, Dipl.-Ing., W-7530 Pforzheim (DE); Pape, Karl, Dipl.-Ing., W-3180 Wolfsburg 12 (DE)
(74) Vertreter: Lemcke, Rupert, Dipl.-Ing.

(56) Entgegenhaltungen:
- AT-B- 17 944
- AT-B- 326 965
- DE-A- 3 005 706
- DE-C- 34 871
- FR-A- 2 193 952

## Beschreibung

Die Erfindung geht von einem Wickelschlauch gemäß dem Oberbegriff des Anspruchs 1 aus, der ein flexibles Leitungselement für Abgasleitungen von Verbrennungsmotoren betrifft.

Derartige Leitungselemente haben neben der Funktion der Abgasableitung vornehmlich die Aufgabe, die Abgasanlage von den vom Motor herrührenden Schwingungen zu entkoppeln. Ein Teil der Eigenfrequenz des an den Motor angekoppelten Schwingungssystems "Entkoppler/Abgasanlage" liegen stets im Frequenzbereich der Motorschwingungen. Bei unzureichender Bedämpfung dieses Systems treten beim Durchfahren der Resonanzstellen unerwünscht große Amplitudenüberhöhungen auf, die zu Körperschallübertragungen in die Fahrgastzelle des Fahrzeuges führen. Auch können ermüdungsbedingte mechanische Schäden am Auspuffsystem auftreten.

Bei den bisher zur Schwingungsentkopplung verwendeten Leitungselementen werden Wickelschläuche mit Falzprofil verwendet.

Gemäß dem Gegenstand der DE-A1 3 924 697 sind die Falzverbinso verpreßt, daß eine der gewünschten Dämpfung entsprechende Reibung zwischen den Profilwindungen besteht. Dadurch werden höhere Verstellkräfte erforderlich.

Beim Gegenstand der FR-A 2.193.952 befinden sich zwischen den ineinandergreifenden Profilwindungen bandförmige Einlagen aus einem Nichteisenmetall. Dadurch soll die Möglichkeit unterbunden werden, daß sich die ineinandergreifenden Profilwindungen bei hohen Abgastemperaturen miteinander verschweißen.

In beiden Fällen nehmen die schwingungsdämpfenden Reibungswerte im Verlauf der Betriebsdauer aufgrund eines gewissen Verschleißes ab. Dadurch verringert sich der Dämpfungsgrad und die Schwingungsamplituden der Abgasanlage in den Resonanzdurchgängen nehmen zu. Bei besonders weicher Aufhängung der Abgasanlage - was an sich günstig ist - und bei bestimmten Anordnungen des Leitungselements als Entkoppler können unerwünschte Geräusche auftreten.

Die Aufgabe der Erfindung besteht daher darin, einen Wickelschlauch aus Metall vornehmlich zur Schwingungsentkopplung von Abgasanlagen von Kraftfahrzeugen zu schaffen, bei dem die vorgegebenen Dämpfungswerte über einen langen Einsatzzeitraum im wesentlichen konstant bleiben, sowie ein definiertes Maß der Dämpfung ohne Einfluß auf die Verstellkräfte erzielt wird.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß durch die im wesentlichen der überdekkungsbreite der Falzborde entsprechende dauerelastische bandförmige, federnd vorgespannte Einlage ein Materialabrieb durch radial federndes Nachführen ausgeglichen wird, daß die größere Breite der Einlage bei Erreichen der Strecklage dämpfend wirkt, daß die Dämpfungswirkung durch das Umgreifen der Längskanten der Falzborde durch die Einlage noch erhöht wird, daß die Einlage ein Metallband ist, das durch eine Profilierung die radiale Federwirkung erhält, oder daß die Einlage ein in sich elastisches Drahtgestrickelement ist, und daß die Einlage auch bei hohen Temperaturen ihre Federwirkung nicht verliert. Vorteilhaft ist eine Profilierung des Metallbandes dann, wenn das Band zwischen dem zur Schlauchachse hin gerichteten inneren Schenkel und dem gegenüberliegenden Falzbord angeordnet ist, und wenn durch eine Krafteinwirkung von außen seine Auslenkung in die ebene Form wie vor seiner Profilierung jederzeit möglich ist und diese auch im Hochtemperaturbereich dauerhaft im elastischen Bereich liegt.

Anhand mehrerer Ausführungsbeispiele wird die Erfindung in Verbindung mit den Zeichnungen nachfolgend näher erläutert. Es zeigt:
- Fig.1: ein flexibles Leitungselement für Abgasanlagen von Kraftfahrzeugen mit einem Wickelschlauch gemäß der Erfindung.
- Fig.2: ein Diagramm über das Schwingungsverhalten eines mit einer Abgasanlage verbauten Leitungselements gemäß Fig.1 im ungedämpften und gedämpften Zustand.
- Fig.3: den Ausschnitt A der Fig.1 in vergrößerter schematischer Darstellung in drei unterschiedlichen Betriebszuständen mit einer zwischen den Falzborden benachbarter Profilwindungen angeordneten Einlage aus einem profilierten Metallband.
- Fig.4 bis Fig.6: den Ausschnitt A der Fig.1 in vergrößerter schematischer Darstellung in jeweils drei verschiedenen Betriebszuständen mit unterschiedlich ausgebildeten Einlagen.

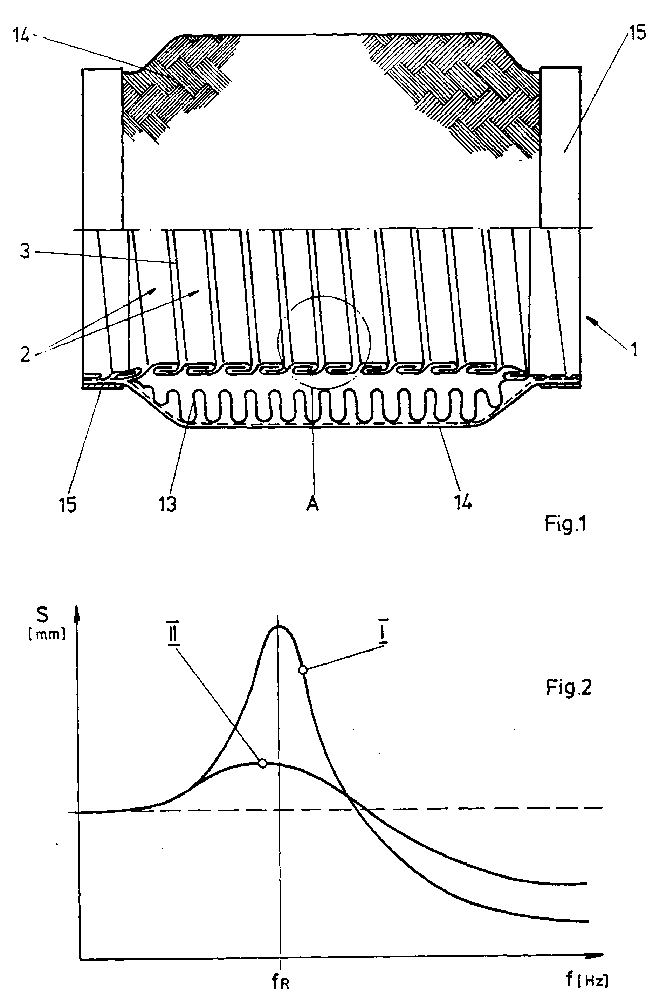

Fig.1 zeigt in teilweiser Querschnittsdarstellung ein Leitungselement für Abgasanlagen von Verbrennungsmotoren mit einem Wickelschlauch 1, der insbesondere zur Entkopplung einer angeschlossenen Abgasanlage von vom Motor herrührenden Schwingungen als Dämpfungsglied ausgebildet ist. Der Wickelschlauch 1 ist in an sich bekannter Weise von einem federelastischen Wellbalg 13 umgeben, der seinerseits mit einem Metalldrahtgeflecht 14 überzogen ist. Der Wickelschlauch 1, der Wellbalg 13 und das Drahtgeflecht 14 sind an den Enden miteinander verpreßt und mit Stützringen 15 zum Rohrleitungsanschluß verschweißt.

Ein in eine Abgasanlage verbautes vorbeschriebenes Leitungselement bildet mit ersterer ein Schwingungssystem, dessen Resonanzfrequenzen teilweise in dem Frequenzbereich liegen, mit dem das System in Abhängigkeit von der Drehzahl des Motors erregt wird. Fig.2 zeigt in Form eines Diagramms die Auswirkung einer Erregung des vorgenannten Schwingungssystems, das bei unzureichender Dämpfung um die jeweilige Resonanzfrequenz f_{R} zu unerwünscht großen Wegamplituden angeregt wird (Kurve I), während z.B. durch eine erhöhte Reibungsdämpfung die Auswirkung der Motorschwingungen auf das Schwingungssystem "Leitungselement/Abgasanlage" gemäß Kurve II auf ein zulässiges Maß reduziert werden kann.

Die erforderliche Reibungsdämpfung kann, wie eingangs bereits erwähnt, durch ein entsprechendes Verpressen der Falzverbindungen des Wickelschlauches 1 erreicht werden. Wie die Praxis gezeigt hat, läßt sich allein mit dieser Maßnahme keine langfristige Standzeit der eingestellten Dämpfung erreichen.

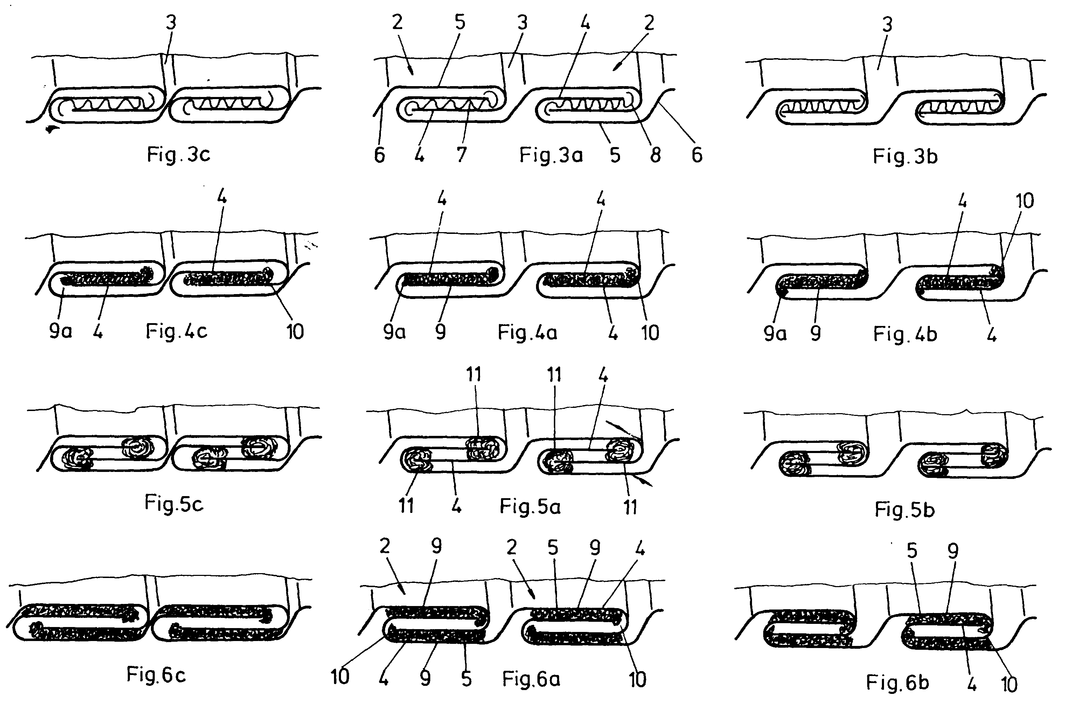

Die Figuren 3 bis 6 zeigen verschiedene Ausführungsbeispiele, durch die eine langfristig wirksame Reibungsdämpfung erzielt werden kann.

Die Figuren 3 bis 6 sind eine vergrößerte schematische Darstellung des Auschnittes A der Fig.1, die jeweils zwei miteinander verpreßte Profilwindungen 2 des Wickelschlauches 1 zeigen. Die als Falz- oder Agraffprofil bezeichneten ineinandergreifenden Windungen 2 haben S-Form. Sie besteht aus zwei gegenläufig angeordneten, über einen Steg 6 miteinander verbundenen haarnadelartigen Profilen, über die die Windungen 2 miteinander in Eingriff stehen. Die Profile bestehen aus Schenkel 5 und Falzbord 4. Die Darstellung des Eingriffs der beiden ineinandergreifenden Windungen 2 im Schnitt ist aus Gründen der besseren übersicht schematisiert. Es besteht bei den Figuren 3 und 4 zwischen den gegenüberliegenden Falzborden 4 der Windungen 2 über die Einlage ein mittelbarer Reibschluß, während jeweils zwischen dem Schenkel 5 der einen Windung 2 und dem Falzbord 4 der anderen Windung 2 ein direkter Reibschluß besteht. Bei der Fig.6 besteht zwischen dem Schenkel 5 und dem Falzbord 4 der beiden Windungen 2 über die Einlage ein mittelbarer Reibschluß und ein direkter Reibschluß zwischen den beiden Falzborden 4 der ineinandergreifenden Windungen 2. Bei der Fig.5 liegt dagegen über die Einlagen 11 ein mittelbarer Reibschluß zwischen allen Schenkeln 5 und Falzborden 4 der ineinandergreifenden Windungen 2 vor. Die Ausführung gemäß Fig.6 ist auch mit nur einer Einlage z.B. aus einem profilierten Metallband denkbar. In jedem Fall muß die Vorspannung der elastischen Einlage so groß sein, daß die freien Falzborde 4 und die freien Schenkel 5 immer in direktem Reibschluß stehen.

Bei allen vier Ausführungsbeispielen der Figuren 3 bis 6 befindet sich im Eingriffsbereich der Windungen 2 mindestens eine bandförmige dauerelastische Einlage unter Vorspannung. Diese ist jeweils so ausgebildet, daß sie trotz der Verpressung der Windungen 2 noch eine so hohe Dauerfederwirkung besitzt und bei hohen Temperaturen behält, daß ein Abrieb durch Nachführen aus dem elastischen Bereich der vorgespannten Einlage ausgeglichen wird, so daß der Reibschluß und damit die eingestellte Dämpfung erhalten bleiben.

Die Figuren 3 bis 6 zeigen verschiedene Arten und Formen von Einlagen, wobei jede Figur den Wickelschlauch 1 (Fig.1) in einer Mittellage (a), in der Strecklage (b) und in der Stauchlage (c) zeigt.

Beim Beispiel der Fig.3 besteht die dauerelastische Einlage aus einem profilierten Metallband 7, das zwischen den einander gegenüberliegenden Falzborden 4 angeordnet ist. Es kann auch zwischen dem zur Schlauchachse hin gerichteten Schenkel 5 und dem gegenüberliegenden Falzbord 4 angeordnet sein. Es kann z.B. Wellenprofil mit mindestens einer Welle haben. Die Darstellung zeigt das Band 7 quer zur Längsrichtung gewellt. Es kann jedoch genausogut in Längsrichtung gewellt sein. Weitere denkbare Profilierungen sind z.B. ein Noppen- oder Rändelprofil. Bei geringen Abmessungen des Wickelschlauches 1 bietet sich die Verwendung von Knitterfolie als Einlage an. Jedwede Profilierung des Bandes 7 ist geeignet, wenn sie im verpreßten Zustand der Profilwindungen 2 die erwähnte Nachstelleigenschaft hat. Ist das Band 7 z.B. wie beim dargestellten Wellenprofil querelastisch, so können die Längskanten 8 des Profilbandes nach oben bzw. nach unten, die Kante des oberen und unteren Falzbordes 4 umgreifend, gebogen sein. Dieses dient der Lagesicherung des Bandes 7 und dämpft den Einlauf in die Strecklage gemäß Fig.3b. Der Spielraum 3 zwischen der Strecklage und der Stauchlage gemäß Fig.3c bestimmt über die Länge des Wickelschlauches 1 das Maß der maximalen Bewegungsaufnahme.

Bei den Beispielen der Figuren 4 bis 6 bestehen die bandförmigen Einlagen aus Drahtgestrick-Elementen 9 bzw. 11, wie sie durch Verdichten, Prägen oder anderweitige Bearbeitung von Drahtgestricken hergestellt werden. Drahtgestricke bestehen aus schlingenförmig ineinandergreifenden Maschen aus einem endlosen Draht, Faden oder Faser aus Metall, Aluminiumsilikat oder dergleichen.

Das Beispiel der Fig.4 sieht eine Einlage zwischen den einander gegenüberstehenden Falzborden 4 vor, die aus einem flachen bandförmigen Drahtgestrick-Element 9 besteht. Die Breite des bandförmigen Elementes 9 ist größer als die Breite der übereinandergreifenden Falzborde 4. Das Element 9 ist so geformt, daß es um die Längskante des jeweiligen Falzbordes 4 herumgreift (Pos.10). Dadurch ist eine Lagesicherung des Elementes 9 gegen eine mögliche Verschiebung gegeben. In der Strecklage gemäß Fig.4b legt sich der überstehende Teil 9a des Elementes 9 um die Längskante des unteren Falzbordes 4 und wirkt dadurch dämpfend auf den Einlauf in die Strecklage; desgleichen der um die Längskante des oberen Falzbordes 4 greifende Teil 10 des Elementes 9.

Das Beispiel der Fig.5 sieht eine geteilte Einlage aus zwei zusammengefalteten bandförmigen Drahtgestrick-Elementen 11 vor, die jeweils auf die Falzborde 4 aufgesteckt sind. Die Lage kann z.B. durch Laser-Punktschweißen gesichert werden.

Das Beispiel der Fig.6 weicht von den vorhergehenden dadurch ab, daß zwischen den ineinandergreifenden Windungen 2 jeweils zwei Einlagen vorgesehen sind. In diesem Fall befinden sich die Einlagen jeweils zwischen einem Schenkel 5 und dem gegenüberliegenden Falzbord 4. Die Einlage kann das gleiche Drahtgestrick-Element 9 sein, wie es zu Fig.4 beschrieben wurde. Der hochgebogene Teil 10 dient auch in diesem Fall zur Lagesicherung und als Dämpfungsglied in der Strecklage gemäß Fig.6b. Gegenüber den anderen Ausführungen besteht die Möglichkeit, daß die Einlage seitlich herausrutscht. Aus diesem Grunde ist es angebracht, das Drahtgestrick-Element 9 oder jede andere geeignete Einlage durch eine Rollnaht oder punktförmiges Laser-Schweißen fest mit der jeweiligen Windung 2 zu verbinden. Natürlich ist es denkbar, eine Fixierung der Einlage durch Profilieren der Schenkel 5 und/oder der Falzborde 4 zu erreichen.

Als Teil eines Leitungselements der eingangs beschriebenen Art wird an den Wickelschlauch 1 kein Anspruch auf Dichtheit gestellt. Anders bei einem z.B. als gelenkige Verbindung in einer Rohrleitung dienenden eigenständigen Schlauchelement; hier werden an die Dichtheit hohe Ansprüche gestellt. Diese läßt sich mit Drahtgestrick-Elementen gemäß Fig.4 bis 6 erreichen, die durch einen Füllstoff aus Grafit und/oder Glimmer druckdicht sind.

In Anwendungsbereichen, wo Leitungselemente der vorbeschiebenen Art hohen Temperaturen ausgesetzt sind, wie z.B. bei Verwendung in Abgasanlagen von Kraftfahrzeugen, müssen die Einlagen ihre Elastizität bzw. Federwirkung auch unter diesen Gegebenheiten dauerhaft behalten.

## Patentansprüche

1. Wickelschlauch (1) aus Metall mit einem die einzelnen Schlauchwindungen radial gegeneinander abstützenden Falzprofil für Abgasanlagen von Verbrennungsmotoren, bei dem sich zwischen den über Schenkel (5) und Falzbord (4) ineinandergreifenden Profilwindungen (2) wenigstens eine der Reibungsbeeinflussung dienende, bandförmige Einlage (7, 9, 11) aus Metall befindet,
dadurch gekennzeichnet,
daß die Einlage (7, 9, 11) eine dauerelastische Struktur aufweist, und daß die Einlage so federnd vorgespannt ist, daß die ineinandergreifenden Schenkel (5) und Falzborde (4) der Profilwindungen (2) ständig in im wesentlichen gleichbleibenden Reibschluß gehalten werden.

2. Wickelschlauch gemäß Anspruch 1,
dadurch gekennzeichnet,
daß die Breite der Einlage (9) größer ist als die Breite der übereinandergreifenden Falzborde (4).

3. Wickelschlauch gemäß Anspruch 2,
dadurch gekennzeichnet,
daß die Einlage (9) so geformt ist, daß sie um die Längskante (19) mindestens eines Falzbordes (4) herumgreift.

4. Wickelschlauch gemäß Anspruch 1,
dadurch gekennzeichnet,
daß die Einlage (7, 9, 11) zwischen den einander gegenüberstehenden und einander übergreifenden Falzborden (4) benachbarter Profilwindungen (2) angeordnet ist.

5. Wickelschlauch gemäß Anspruch 1,
dadurch gekennzeichnet,
daß die Einlage (9, 11) zwischen einem Schenkel (5) und einem Falzbord (4) von ineinandergreifenden Profilwindungen (2) angeordnet ist.

6. Wickelschlauch gemäß Anspruch 5,
dadurch gekennzeichnet,
daß die Einlage (9, 11) zwischen dem zur Schlauchachse hin gerichteten inneren Schenkel (5) und dem gegenüberliegenden Falzbord (4) angeordnet ist.

7. Wickelschlauch gemäß Anspruch 5,
dadurch gekennzeichnet,
daß zwischen jedem Schenkel (5) und dem gegenüberliegenden Falzbord (4) eine Einlage (9, 11) angeordnet ist.

8. Wickelschlauch gemäß Anspruch 1 oder 3,
dadurch gekennzeichnet,
daß die Einlage aus zwei die Längskanten (10) der Falzborde (4) umgreifenden Bändern (11) besteht.

9. Wickelschlauch gemäß einem der vorhergehenden Ansprüche,
dadurch gekennzeichnet,
daß die Einlage (7) ein Metallband ist, das seine Dauerelastizität durch eine Profilierung erhält.

10. Wickelschlauch gemäß Anspruch 9,
dadurch gekennzeichnet,
daß das Metallband (7) so profiliert ist, daß durch Krafteinwirkung von außen eine Auslenkung in die ebene Form wie vor der Profilierung jederzeit möglich ist und diese dauerhaft im elastischen Bereich liegt.

11. Wickelschlauch gemäß einem der vorhergehenden Ansprüche,
dadurch gekennzeichnet,
daß die Einlage (9, 11) aus einem bandförmigen Drahtgestrick-Element besteht.

12. Wickelschlauch gemäß einem oder mehreren den vorhergehenden Ansprüchen bei einer Verwendung im Hochtemperaturbereich,
dadurch gekennzeichnet,
daß die Elastizität der als Einlage (7, 9, 11) verwendeten Materialien dauerhaft temperaturbeständig ist.

## Claims

1. Wound hose (1) made from metal with a folded profile for supporting the individual hose windings radially against each other, for exhaust equipment of internal combustion engines, in which, at least one strip-shaped insert (7, 9, 11) made of metal is disposed between the profile windings (2) that are meshed together via shanks (5) and folded rims (4), in order to influence friction,
characterised in that
the insert (7, 9, 11) has a permanently resilient structure, and in that the insert is so resiliently prestressed that the mutually meshing shank (5) and folded rim (4) of the profiled windings (2) are held permanently in an essentially constant frictional locking engagement.

2. Wound hose according to claim 1,
characterised in that
the width of the insert (9) is greater than the width of the folded rims (4) engaging over each other.

3. A wound hose according to claim 2,
characterised in that
the insert (9) is so formed that it grips around the longitudinal edge (10) of at least one folded rim (4).

4. A wound hose according to claim 1,
characterised in that
the insert (7, 9, 11) is arranged between the mutually opposed and mutually overlapping folded rims (4) of adjacent profiled windings (2).

5. A wound hose according to claim 1,
characterised in that
the insert (9, 11) is arranged between a shank (5) and a folded rim (4) of profiled windings (2) that engage into each other.

6. A wound hose according to claim 5,
characterised in that
the insert (9, 11) is arranged between the inner shank (5) that is directed towards the axis of the hose and the oppositely lying folded rim (4).

7. A wound hose according to claim 5,
characterised in that
a respective insert (9, 11) is arranged between each shank (5) and the oppositely lying folded rim (4).

8. A wound hose according to claim 1 or 3,
characterised in that
the insert consists of two strips (11) which engage around two of the longitudinal edges (10) of the folded rim (4).

9. A wound hose according to any one of the preceding claims,
characterised in that
the insert (7) is a metallic strip which receives its permanent resilience through profiling.

10. A wound hose according to claim 9,
characterised in that
the metallic strip (7) is so profiled that through the application of an external force a deflection in the same shape as before the profiling is possible at all times and that this lies permanently within the elastic region.

11. A wound hose according to any one of the preceding claims,
characterised in that
the insert (9, 11) consists of a strip-shaped wire braid element.

12. A wound hose according to any one or more of the preceding claims in an application in the high temperature region,
characterised in that
the elasticity of the materials used as the insert (7, 9, 11) is permanently temperature-resistant.

## Revendications

1. Tuyau enroulé (1) en métal, ayant un profil plié, soutenant radialement les uns par rapport aux autres les différents enroulements du tuyau pour des installations de gaz d'échappement de moteur à combustion interne dans lequel entre les enroulement profilés (2) s'engageant les uns dans les autres par les branches (5) et le bord de pliage (4) se trouve au moins un insert ou patte d'insertion (7, 9, 11) sous forme de bande, servant à intervenir sur le frottement et réalisée en métal, caractérisé en ce que l'insert (7, 9, 11) présente une structure à élasticité permanente, et en ce que l'insert est précontraint élastiquement de manière que les branches (5) et les bordures de plié (4) s'engageant les unes sur les autres, des enroulements profilés (2) soient maintenus en permanence en une liaison par frottement restant pratiquement constante.

2. Tuyau enroulé selon la revendication 1, caractérisé en ce que la largeur de l'insert (9) est supérieure à la largeur des bords de pliage (4) s'engageant les uns sur les autres.

3. Tuyau enroulé selon la revendication 2, caractérisé en ce que l'insert (9) est conformé de manière à saisir le pourtour de l'arrêt longitudinale (19) d'au moins un bord de pliage (4).

4. Tuyau enroulé selon la revendication 1, caractérisé en ce que l'insert (7, 9, 11) est disposé entre les bords de pliage (4), placée en regard les uns des autres et s'engageant les uns sur les autres, appartenant à des enroulements profilés (2) voisins.

5. Tuyau enroulé selon la revendication 1, caractérisé en ce que l'insert (9, 11) est disposé entre une branche (5)et un bord de pliage (4) appartenant à des enroulements profilés (2) s'engageant les uns dans les autres.

6. Tuyau enroulé selon la revendication 5, caractérisé en ce que l'insert (9, 11) est disposé entre la branche intérieure (5) orientée vers l'axe de tuyau et le bord de pliage (4) opposé.

7. Tuyau enroulé selon la revendication 5, caractérisé en ce qu'entre chaque branche (5) et le bord de pliage (4) opposé est disposée un insert (9, 11).

8. Tuyau enroulé selon la revendication 1 ou 3, caractérisé en ce que l'insert est constitué de deux bandes (11) entourant les arêtes longitudinales (10) des bords de pliage (4).

9. Tuyau enroulé selon l'une des revendications précédentes, caractérisé en ce que l'insert (7) est une bande métallique obtenant son élasticité permanente au moyen d'un profilage.

10. Tuyau enroulé selon la revendication 9, caractérisé en ce que la bande métallique (7) est profilée de manière que, sous l'effet d'une force venant de l'extérieur, il puisse être, à tout moment, effectué une déformation restituant la forme plane d'avant le profilage, cette déformation étant située durablement dans la plage élastique.

11. Tuyau enroulé selon l'une des revendications précédentes, caractérisé en ce que l'insert (9, 11) est constitué d'un élément à mailles de fil métallique se présentant sous forme de bande.

12. Tuyau enroulé selon l'une ou plusieurs des revendications précédentes, pour utilisation dans la plage des hautes températures, caractérisé en ce que l'effet d'élasticité des matériaux utilisés comme inserts (7, 9, 11) est résistant à la température, de façon durable.
